# EUROPEAN PATENT SPECIFICATION

(11) **EP 4 081 735 B1**
(45) Date of publication and mention of the grant of the patent: **22.11.2023**
(21) Application number: 20830361.0
(22) Date of filing: 21.12.2020
(51) Int. Cl.: F21V 8/00, F21V 5/00, F21Y 103/10, F21Y 115/10

(54) **OPTICAL DEVICE FOR LED LIGHTING APPLIANCES**
OPTISCHE VORRICHTUNG FÜR LED-LEUCHTMITTEL
DISPOSITIF OPTIQUE POUR APPAREILS D'ÉCLAIRAGE À DEL

(30) Priority: 23.12.2019 IT 201900025279
(43) Date of publication of application: 02.11.2022
(73) Proprietor: Beghelli S.p.A., 40053 Valsamoggia (BO) (IT)
(72) Inventor: BEGHELLI, Gian Pietro, 40053 VALSAMOGGIA (BO) (IT)
(74) Representative: Burchielli, Riccardo
(86) International application number: PCT/IT2020/050319
(87) International publication number: WO 2021/130793

(56) References cited:
- EP-A1- 3 015 761
- WO-A1-2015/089517
- CA-A1- 2 961 624
- DE-U1-202016 002 197
- KR-A- 20110 033 699
- US-A1- 2012 313 534

## Description

This invention relates, in general, to an optical device for LED lighting appliances designed for ordinary and/or emergency lighting applications.

More specifically, the invention relates to a lens for LED lighting appliances, that is, an optical device comprising a hybrid system which exploits a light guide to bring the light to a zone of the lens where it is possible to extract it in a controlled manner, thanks to specific geometries, in order to obtain a photometric solid designed for ordinary lighting and emergency lighting applications and in order to have an illuminated surface which is large and such as to reduce glare.

A correct ordinary and emergency lighting must guarantee, in the field of vision, sufficiently high and rationally distributed lighting to allow the perception of important areas; in particular, the emergency lamps must guarantee a sufficient luminous flux to allow an easy and fast identification of the escape routes, especially in the case of danger.

On the other hand, a correct ordinary lighting must reduce glare as much as possible with adequate illumination and uniformity in the field of view.

Amongst the various embodiments used for LED lighting, a first type of LED lighting appliances are still known, which have a continuous panel of LEDs for direct light diffusion, and a second type of LED lighting appliances, which are equipped with a series of lenses positioned in a substantially central area of the appliance.

Although the first type of appliances has the advantage of having a very low luminance and therefore a minimum glare, further drawbacks are determined by the yellowing of the surface, the low thermal dissipation of the LED diodes and the constructive complexity of the structure.

On the other hand, LED lighting appliances equipped with central lenses, despite a simple construction of the structure, an excellent thermal dissipation of the LED diodes and the absence of yellowing phenomena, have a high luminance and, therefore, glare phenomena due to the exposed LEDs.

An optical device for LED lighting appliances having the technical features described in the preamble of the appended claim 1 is known, for example, from DE202016002197U1, KR2011/0033699A, WO2015/089517A1, EP3015761A1, US2012/313534A1 and CA2961624A1.

The aim of the invention is therefore to make an LED lighting appliance, which is able to achieve a minimum luminance, in order to limit glare phenomena, whilst maintaining, at the same time, an excellent thermal dissipation of the LEDs and avoiding yellowing phenomena of the surface and/or of the structure.

Within the context of the above-mentioned aim, the purpose of the invention is to make a compact optical system, which is able to produce a photometric solid designed to satisfy the standards regarding ordinary and emergency lighting with a good visual comfort, therefore with a reduced luminance, starting from a spot or linear light source.

A further aim of the invention is to make an optical device which can be incorporated in an LED lighting appliance and which has a relatively simple, safe and reliable construction, using substantially known technologies and relatively inexpensive components.

These and other aims according to the invention are achieved by making an optical device or lens, designed to be mounted in an ordinary and/or emergency LED lighting appliance, according to appended claim 1. Further aims and advantages of an optical device for LED lighting appliances according to the invention will more fully emerge from the description which follows, of a non-limiting example, referred to the accompanying schematic drawings in which:
- Figure 1 is a perspective view of a preferred but non-limiting embodiment of an optical device used in the LED lighting appliance according to the invention;
- Figure 2 is a side view of the optical device of Figure 1, according to the invention;
- Figure 3 is a plan view from above of the optical device of Figures 1 and 2, according to the invention;

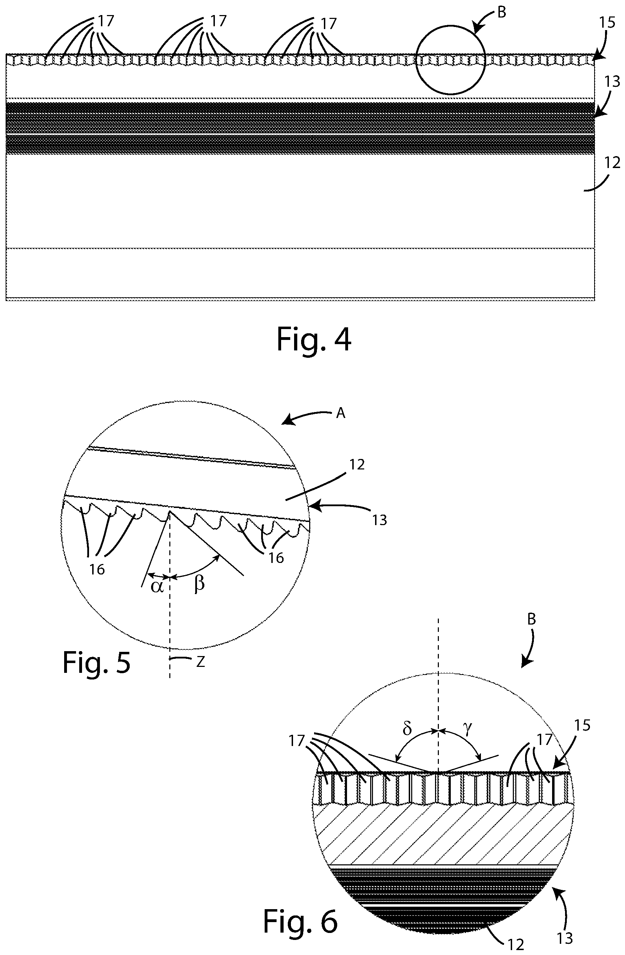

- Figure 4 is a schematic cross-sectional view through the line IV-IV of Figure 2 of the optical device of Figures 1 and 2, according to the invention;
- Figure 5 shows the enlarged detail indicated by A in Figure 2, according to the invention;
- Figure 6 shows the enlarged detail indicated by B in Figure 4, according to the invention.

With reference to the above-mentioned drawings, the LED lighting appliance, which is the object of the invention, comprises an optical device 10, advantageously of a hybrid type and having a central zone 11, with a flat base where the LED light source is located, and peripheral elongated portions 12, specular with respect to the central zone 10, inside of which a light guide 13 is positioned, designed to bring the light coming from the light source to zones of the optical device 10 where it is possible to extract it in a controlled manner, thanks to specific geometries of the device 10; in this way, a photometric solid designed for ordinary lighting and emergency lighting applications is obtained, with the further advantage of a large illuminated surface such as to reduce glare.

The light extraction geometries for controlling the light in terms of photometric distribution are designed in order to have control in two perpendicular planes.

In particular, the optical device 10 allows the result to be obtained according to which substantially 100% of the light emitted by the LED light source is guided by total internal reflection inside the elongated portions 12 and there is no refracted direct light component.

In this way, the LED light source is never directly visible from the outside and the control is carried out entirely by the upper and lower structures of the elongated portions 12; this means that the structure of the optical device 10 allows the photometric distribution to be controlled on both the XZ and YZ planes.

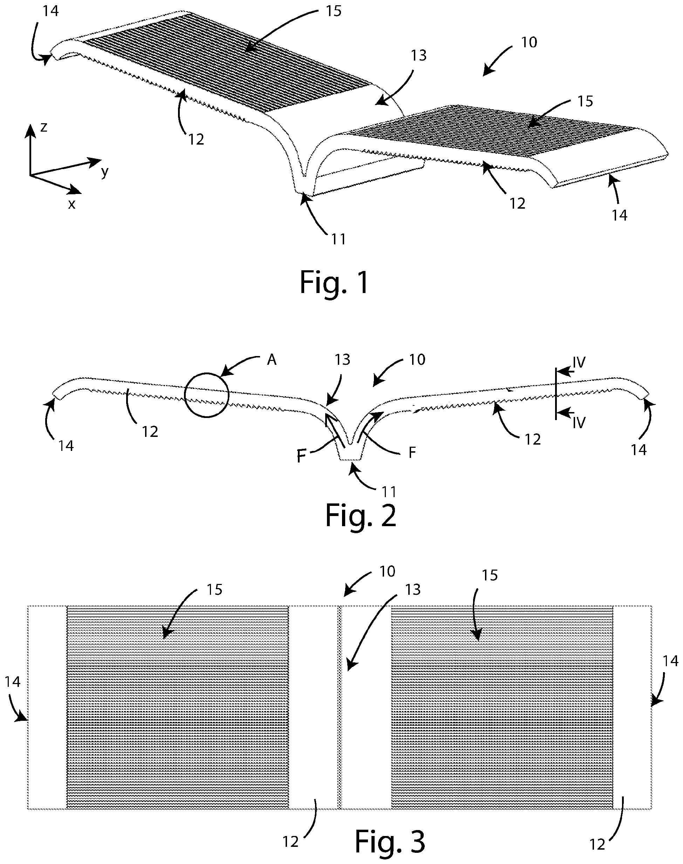

More specifically, the optical device 10 consists of a central light input zone 11, in which the LED light source is positioned, whose direct light emission has a direction of emission coinciding with the axis indicated with Z in Figure 1, and a light guide 13, which, placed inside each elongated portion 12 and thanks to a curved profile, carries the light emission, coming from the LED light source (arrows F of Figure 2), towards the peripheral elongated portions 12, from where it can exit from the guide 13, in the plane XZ, at predetermined emission surfaces 15, having an internal structure with a well-defined geometry.

Each internal structure of the respective elongated portion 12 has, at and along the entire length of the emission surface 15, a series of structural elements 16, with a triangular shape, such as prisms and/or triangular tetrahedrons, placed in succession with each other and on opposite sides with respect to the emission surface 15.

Preferably, the structural elements 16 have at least two sides, which form respective angles α, β predetermined and, advantageously, equal respectively to about 10° and 46°, with respect to the axis Z which is orthogonal to the surface 15; each of these angles α and β may however vary from 1 ° to 89°.

Perpendicularly to the above-mentioned structural elements 16 and on the opposite side with respect to the light guide 13 (that is, in contact with each emission surface 15) there are further structural elements 17, having a triangular cross-section, such as prisms and/or triangular tetrahedrons, placed in succession along the entire emission surface 15.

The structural elements 17 have at least two sides, which form respective angles γ, δ which are predetermined and equal to each other and equal to 76°, with respect to the axis Z which is orthogonal to the surface 15.

The control of the photometric distribution occurs, therefore, both on the plane YZ through the structural elements 17 of the surface 15, and on the plane XZ through the structural elements 16 formed on the opposite side with respect to the surface 15.

Consequently, the structured areas corresponding to the emitting surfaces 15 of the optical device 10 are illuminated with a medium-low glare light emission; in other words, by directly viewing the surfaces 15, the direct brightness of the LED source is not seen, as is the case with traditional appliances, since the emitting surface is in a more distant area (because the light is guided by the guide 13) and much larger than the surface of the LED source; thus, luminance is reduced.

In practice, the optical structures with variable geometry present on the elongated ends 12 of the optical device 10 are configured in such a way as to extract the light guided by the guide 13 and to emit it outside the optical device 10 according to suitable directions, which allow a suitable photometric solid to be formed, designed to produce the desired advantages.

The residual light, which is not extracted from the geometrical structures described above, is used to illuminate the ends or lateral zones 14, from which indirect light is emitted, that is, light having a direction facing the hemisphere behind the emission direction of the LED source (according to the direction of the axis -Z).

This contribution is important in order to ensure a quantity of ambient light designed to reduce the existing contrast with respect to the light extracted directly at the emission surfaces 15.

The optical device 10 thus achieves a direct light contribution and, at the same time, an indirect light contribution with medium-low glare. Lastly, the optical device 10 may have a length which is variable and dependent on the length of the light source.

It has been found in practice that the optical device for LED lighting appliances according to the invention is particularly innovative and advantageous and achieves the intended aims and advantages; in particular, amongst the above-mentioned advantages, the following should be noted:
- medium-low luminance to avoid glare;
- excellent LED dissipation;
- no yellowing of the structure;
- constructive simplicity.

The characteristics of the optical device for LED lighting appliances, according to the invention, clearly emerge from the description, as do the advantages thereof.

Lastly, it is clear that numerous other variants might be made to the optical device for LED lighting appliances in question, without thereby departing from the scope of the invention as expressed in the accompanying claims.

## Claims

1. An optical device (10) for LED lighting appliances, comprising a central area (11) where a LED light source is located and peripheral elongated portions (12) which are specular with respect to said central area (11), each of said portions (12) having internally a light guide (13) configured to convey (F) the light coming from said light source into predetermined areas of said optical device (10) where it is possible to extract at least a portion of light in a controlled manner and according to predetermined directions, so as to obtain a photometric solid for ordinary and emergency lighting appliances and to have a large illuminated surface with a glare reduction, wherein said light is extracted at emission surfaces (15) belonging to said peripheral elongated portions (12), and wherein each peripheral elongated portion (12) has, at a respective emission surface (15), a series of first structural elements (16) with a triangular shape, placed one after the other and on the opposite side with respect to said emission surface (15), and wherein second structural elements (17) are provided perpendicularly to said first structural elements (16) and at the opposite side with respect to said light guide (13), said second structural elements (17) being of a triangular shape and being placed one after the other along said emission surface (15), **characterized in that** said second structural elements (17) have at least two sides which form respective angles (γ, δ) having an amplitude equal to 76°, with respect to an axis (Z) perpendicular to said emission surface (15).

2. The optical device (10) according to claim 1, **characterized in that** said first structural elements (16) have at least two sides which form respective angles (α, β) having an amplitude from 10° to 46° respectively, with respect to an axis (Z) which is perpendicular to said emission surface (15).

## Patentansprüche

1. Optische Vorrichtung (10) für LED-Beleuchtungsgeräte, die einen zentralen Bereich (11), in dem sich eine LED-Lichtquelle befindet, und längliche Umfangsabschnitte (12) umfasst, die in Bezug auf den zentralen Bereich (11) spiegelnd sind, wobei jeder Abschnitt (12) im Inneren einen Lichtleiter (13) aufweist, der so konfiguriert ist, dass er das von der Lichtquelle kommende Licht in vorgegebene Bereiche der optischen Vorrichtung (10) leitet (F), in denen es möglich ist, wenigstens einen Teil des Lichts auf gesteuerte Weise und gemäß vorgegebenen Richtungen zu extrahieren, um einen photometrischen Festkörper für normale und Notbeleuchtungsvorrichtungen zu erhalten und eine große beleuchtete Fläche mit einer Blendungsreduzierung zu haben, wobei das Licht an Emissionsflächen (15) extrahiert wird, die zu den peripheren länglichen Abschnitten (12) gehören, und wobei jeder langgestreckte Umfangsabschnitt (12) an einer jeweiligen Emissionsfläche (15) eine Reihe von ersten Strukturelementen (16) mit einer dreieckigen Form aufweist, die hintereinander und auf der gegenüberliegenden Seite in Bezug auf die Emissionsfläche (15) angeordnet sind, und wobei sekundäre Strukturelemente (17) senkrecht zu den ersten Strukturelementen (16) und auf der gegenüberliegenden Seite in Bezug auf den Lichtleiter (13) vorgesehen sind, wobei die sekundäre Strukturelemente (17) eine dreieckige Form haben und hintereinander entlang der Emissionsfläche (15) angeordnet sind, **dadurch gekennzeichnet, dass** die zweiten Strukturelemente (17) mindestens zwei Seiten haben, die jeweilige Winkel (γ, δ) mit einer Amplitude von 76° in Bezug auf eine Achse (Z) senkrecht zu der Emissionsfläche (15) bilden.

2. Optische Vorrichtung (10) nach Anspruch 1, **dadurch gekennzeichnet, dass** die ersten Strukturelemente (16) mindestens zwei Seiten haben, die jeweils Winkel (α, β) mit einer Amplitude von 10° bis 46° in Bezug auf eine Achse (Z) bilden, die senkrecht zu der Emissionsfläche (15) steht.

## Revendications

1. Dispositif optique (10) pour appareils d'éclairage à LED, comprenant une zone centrale (11) où se trouve une source lumineuse à LED et des parties périphériques allongées (12) qui sont spéculaires par rapport à ladite zone centrale (11), chacune de ces parties (12) ayant à l'intérieur un guide de lumière (13) configuré pour transporter (F) la lumière provenant de ladite source lumineuse dans des zones prédéterminées dudit dispositif optique (10) où il est possible d'extraire au moins une partie de la lumière de manière contrôlée et selon des directions prédéterminées, afin d'obtenir un solide photométrique pour les appareils d'éclairage ordinaire et de secours et d'avoir une grande surface éclairée avec une réduction de l'éblouissement, où ladite lumière est extraite au niveau des surfaces d'émission (15) appartenant aux parties périphériques allongées (12), et où chaque portion allongée périphérique (12) présente, au niveau d'une surface d'émission respective (15), une série de premiers éléments structurels (16) de forme triangulaire, placés l'un après l'autre et du côté opposé par rapport à ladite surface d'émission (15), et dans lequel de deuxièmes éléments structurels (17) sont prévus perpendiculairement aux premiers éléments structurels (16) et du côté opposé au guide de lumière (13), lesdits deuxièmes éléments structurels (17) étant de forme triangulaire et placés l'un après l'autre le long de ladite surface d'émission (15), **caractérisés en ce que** lesdits deuxièmes éléments structurels (17) ont au moins deux côtés qui forment des angles respectifs (γ, δ) d'une amplitude égale à 76°, par rapport à un axe (Z) perpendiculaire à ladite surface d'émission (15).

2. Dispositif optique (10) selon la revendication 1, **caractérisé en ce que** lesdits premiers éléments structurels (16) ont au moins deux côtés qui forment des angles respectifs (α, β) ayant une amplitude de 10° à 46° respectivement, par rapport à un axe (Z) qui est perpendiculaire à ladite surface d'émission (15).
